# EUROPEAN PATENT APPLICATION

(11) **EP 1 128 267 A1**
(43) Date of publication of application: **29.08.2001**
(21) Application number: 00301486.7
(22) Date of filing: 25.02.2000
(51) Int. Cl.: G06F 11/20, G06F 3/06

(54) **Disk storage system having redundant solid state data storage devices**

(71) Applicant: Hewlett-Packard Company, A Delaware Corporation, Palo Alto, CA 94304 (US)
(72) Inventor: Topham, Andrew, Dursley, Gloucestershire GL11 4NE (GB); Clarke, John Richard, Clevedon, North Somerset BS21 7QL (GB)
(74) Representative: Lawman, Matthew John Mitchell

(57) **Abstract**

A RAID device is provided with a pair of non-volatile solid state data storage devices and one or more rotating disk drives, giving improved access time performance to the array. Data is staged on the pair of solid state data storage devices, and periodically backed up to the rotating disk drive(s).

## Description

### Field of the Invention

The present invention relates to data storage devices for storage of electronic data, and particularly though not exclusively to a data storage device comprising at least one rotating disk drive, and one or more solid state data storage devices capable of substantially faster read and write operations than the disk drive.

### Background to the Invention

Conventional data storage systems for high capacity data storage include conventional 'hard drive' disk drive devices as are well-known in the art. Conventional disk drive comprise a rotating disk having a magnetically readable and writeable coating, which revolves at high revolutions per minute. Such disk drives may store data capacities in the range 4 to 32 Gbytes or more for each individual drive. For greater storage capacities, devices are arranged in arrays, for example in redundant arrays of inexpensive disks (RAID arrays) as are known in the art. Conventional hard disk drives have relatively slow access times for accessing data, compared to conventional solid state devices such as dynamic random access memories (DRAM). The relatively high access time for accessing data in a hard disk drive is predominantly a result of moving a read head to read a particular part of the rotating disk.

Hard disk drives are extremely common due to their relatively low price per unit data storage capacity. However, there are also known in the prior art solid state data storage devices having relatively lower densities of data storage, and having much faster access times than hard disk drives but with higher costs than hard disk drives. Such devices are currently niche market devices, due to their cost. These solid state memory devices have data storage capacities between those of hard disk drives and conventional DRAM's.

The applicants have developed a data storage system having a combination of rotating hard disk drive and solid state data storage devices in a form which is capable of low cost production and which may be suitable for large scale mass market applications. Such systems may provide a high performance data storage device solution for replacement of conventional hard disk drives in mass market applications.

The applicants have studied how users may wish to actually utilize the high performance solid state data storage devices in customer applications, and as a result of this study have identified various problems with the usage of these high performance data storage devices. The applicants estimate that the optimum usage of such high performance data storage devices would be in conjunction with one or more conventional hard disk drives. For optimum technical utility, the applicants envisage that a plurality of high performance solid state non volatile data storage devices will be used in conjunction with one or a plurality of conventional hard disk drive devices, whereby more frequently accessed data is stored on the solid state data storage device, whereas less frequently accessed data is stored on a hard disk drive.

A least cost solution is to provide a single high performance solid state data storage device in series with one or more rotating disk drives, where data is read and written through the solid state device, such that most frequently used data is cached within the solid state data storage device.

Conventional RAID devices use a plurality of redundantly arranged disks such that data is encoded over a number of disks, so that an individual disk can fail, whilst the data is still recoverable from redundancy encoded data stored on the other disks. Introducing a single high performance solid state data storage device introduces a single point of failure into a data storage system. Any data which is solely stored on the solid state data storage device will be at risk of loss if the device should fail.

A possible alternative solution to the problem of single point of failure using an arrangement of a high performance solid state data storage device and one or a plurality of hard disk drives, is to use two high performance solid state data storage devices, which mirror each other in the data which each device stores. The presence of duplicate copies of data removes the single point of failure. However, a disadvantage of this solution is that the cost of this system increases substantially due to the use of two high performance solid state data storage devices, but only the benefit of the storage capability of a single high performance solid state data storage device is achieved, the second high performance data storage device being wholly redundant.

### Summary of the Invention

The present invention relies on the use of two high performance solid state data storage devices and at least one rotating disc data storage device operating under control of a controller device, and makes efficient utility of the available user data storage space in both high performance solid state data storage devices. The result is the provision of a bulk data storage system having a fast write time, but with removal of any single point of failure in a data storage system, with the benefit of an enhanced effective reliability. More than half the data storage space on the combined plurality of high performance data storage devices may be available for use for storing user data.

One effect of the specific embodiments of the present invention may be to speed up access to user data stored in a data storage device system or subsystem comprising a plurality of disk drives.

In a conventional prior art volatile cache memory, an objective is to provide rapid write times and rapid read times, so that data which would otherwise be stored on a rotating hard disk, thereby incurring long access times, is instead stored in a fast access memory, reducing the access time for regularly accessed information. In contrast in the specific embodiments of the present invention, an objective is to provide a rapid write access to large volumes of memory, so that a write confirmation signal can be rapidly returned to a host device, so that a processing in the host device is not delayed in processing data, by waiting for a write acknowledgement signal, thereby allowing the processor to carry out other data processing tasks sooner. A fast write process to large amounts of memory may be available to a host, using the presently disclosed data storage system.

Two or more high performance non volatile solid state data storage devices are arranged with at least one disk drive partition in a group. Each high performance data storage device is logically divided into two partitions, the larger partition of each high performance data storage device being allocated to user data, and a smaller partition of each of high performance data storage device being allocated as a data staging area. The first data staging area in the first high performance data storage device is logically matched to the second user data area of the second high performance data storage device and vice versa, the second data staging area of the second high performance data storage device is logically matched to the first user data area of the first high performance data storage device. Hence, the disk drive partitions, which are part of the group, are used to capture data from the data staging areas. Movement of data between the high performance solid state devices and the hard disk drive(s) is achieved under control of a controller device.

In this specification, the term non volatile solid state data storage device is used to mean a data storage device having no moving parts, and which retains memory of data for an extended period of days or months when external power is removed from the device. Such devices may include magnetic random access memory (MRAM) devices, dynamic random access memory (DRAM) devices having a battery power supply, ferro-electric random access memory (FERAM) devices, and flash electrically programmable read only memory devices. Such devices may be implemented as discrete units, for example of a size and shape suitable for direct replacement of conventional rotating disk hard drives, or may be implemented as part of a controller device of a RAID, on a same chip or component board as such a controller device.

In the data storage system of the present disclosure, there can be rapidly acknowledged a quick access write of data to a non-volatile memory device, which represents an improvement on the write times and acknowledgement times for prior art non-volatile rotating disk data storage devices.

In one mode of operation a write operation to the group routes the user data to be stored to the user data area of the first high performance data storage device. Additionally, a copy of the data is written to the second data staging area of the second high performance data storage device. Once this is complete, a host computer considers the transaction complete and is free to carry on with other functions. This results in a substantially shorter write time than a write time to a conventional hard disk drive.

As a separate process, data stored in the second data staging area of the second high performance data storage device is copied to the disk drive partition of a conventional disk drive data storage device and deleted from the second data staging area of the high performance data storage device. This frees up staging space for subsequent write operations to the second data staging area of the second high performance data storage device and may allow the second size of the second data staging area to be substantially smaller than the user data space on the second high performance data storage device.

Read operations from the group are directed to a said user data area on the first or second high performance data storage device.

Should a failure of a high performance data storage device occur, it is necessary to recover the original data onto a new high performance data storage device. Once this is installed, all the user data may be copied back into place from an archive which exists on the disk drive partition.

According to a first aspect of the present invention there is provided a data storage system comprising:
at least one rotating disk data storage device;
a plurality of solid state data storage devices, each having a data capacity less than a data capacity of said rotating disk data storage device;
wherein each solid state data storage device is divided into a data staging area and a user data area; and
said plurality of data storage devices are arranged such that a set of data is written to at least two of said plurality of solid state data storage devices; and
data is moved from a said data staging area of a said solid state data storage device into said rotating disk data storage device.

Preferably a said solid state data storage device comprises a controller device comprising a processor and a computer program for controlling said processor, said controller device operating to:
receive data from a host device;
write said data to said plurality of solid state data storage devices, such that a copy of said data is stored on each said solid state data storage device; and
transfer data from a said data staging area of at least one said solid state data storage device to a data partition area of said at least one rotating disk data storage device.

A said solid state data storage device may comprise a magnetic random access memory device.

Said solid state data storage device may comprise at least one intrinsically volatile dynamic random access memory, and at least one battery device, providing a combined non-volatile solid state data storage device.

Said solid state data storage device may comprise a non-volatile flash electrically programmable read only memory.

Said solid state data storage device may comprise a ferroelectric random access memory device.

Preferably said solid state data storage devices have a memory capacity of greater than 1 Gbyte.

Preferably said solid state data storage devices are non-volatile devices.

Preferably a said data staging area comprises less than 50% of the data storage capacity of a corresponding said solid state data storage device.

Preferably the data storage system comprises a controller device comprising a processor and a computer program for controlling said processor, and a plurality of data buses connecting said controller with said plurality of solid state data storage devices, wherein each said solid state data storage device communicates with said controller device by a corresponding respective separate said bus.

According to a second aspect of the present invention there is provided a method of storing data in a data storage system comprising a plurality of rotating disk drive data storage devices and a plurality of solid state data storage devices, said method comprising the steps of:
writing a first block of data to a first user data area in a first said solid state data storage device;
writing said first block of data to a second data staging area in a second said solid state data storage device;
writing said data stored in said second data staging area of said second solid state data storage device to a first data partition area in said plurality of rotating disk drives.

The method may further comprise the steps of:
writing a second block of data to a first data staging area of said first solid state data storage device;
writing said same second block of data to a second user data storage area of said second solid state data storage device; and
writing said second block of data from said first data staging area of said first solid state data storage device to a second partition memory area of said plurality of rotating disk drives.

Said step of writing data to said second data staging area and said first user data area may comprise:
(i) receiving said first block of data in a plurality of data segments, each data segment being smaller than said first block of data;
(ii) writing a said segment to said second data staging area and writing said data segment to said first user data area substantially simultaneously;
(iii) after writing said segment to said second data staging area and said first user data area, selecting a new segment;
(iv) repeating steps (ii) to (iii) until all said segments of said data first block are written; and
(v) generating a confirmation signal for confirming that said first data block has been written.

Preferably said method comprises the steps of:
if new data has been written to said second data staging area, copying data of said second data staging area to said first data partition area of said plurality of rotating disks.

Preferably said method comprises the steps of:
determining whether said second data staging area is available for reading;
determining whether unimpeded access to said first data partition area of said plurality of rotating disks is available; and
moving data of said second data staging area to said first data partition area of said plurality of rotating disks.

Said step of writing data to said first data staging area and said second user data area may comprise:
(vi) receiving said second block of data in a plurality of data segments, each data segment being smaller than said second block of data;
(vii) writing a said segment to said first data staging area and writing said segment to said second user data area substantially simultaneously;
(viii) after writing said segment to said first data staging area and said second user data area, selecting a new segment;
(ix) repeating steps (vii) to (viii) until all said segments of said second data block are written; and
(x) generating a confirmation signal for confirming that said second data block has been written.

Preferably said method comprises the steps of:
if new data has been written to said first data staging area, moving said data of said first data staging area to a second data partition area of said plurality of disks.

Preferably said method comprises the steps of:
if new data has been written to said first data staging area, moving data of said first data staging area to said second data partition area of said plurality of rotating disks.

Preferably said method comprises the steps of:
determining whether new data has been written into a first data staging area;
determining whether said first data staging area is available for reading;
determining whether unimpeded access to a second data partition area of said plurality of rotating disks is available; and
moving data of said first data staging area to said second data partition area of said plurality of rotating disks.

### Brief Description of the Drawings

For a better understanding of the invention and to show how the same may be carried into effect, there will now be described by way of example only, specific embodiments, methods and processes according to the present invention with reference to the accompanying drawings in which:
Fig. 1 illustrates schematically a logical layout of a data storage system, cooperating with a host device for storage of data;
Fig. 2 illustrates schematically an internal hardware architecture of a data storage system according to a best mode specific implementation of the present invention;
Fig. 3 illustrates schematically a first data storage operation and a partitioning of a memory area of a plurality of high performance solid state data storage devices, and a plurality of rotating disk drives in a best mode implementation according to the present invention;
Fig. 4 illustrates schematically steps carried out by a control device comprising the data storage system, for carrying out a first write process for writing data received from a host device;
Fig. 5 illustrates schematically a first back-up process controlled by a control device of the data storage system, for backing up data stored on a high performance solid state data storage device to one or more rotating disk drives;
Fig. 6 illustrates schematically a second data storage operation of said data storage system in which a host computer writes data to a first data staging area of a first solid state data storage device and a second user data area of a second solid state storage device, and data in said first data staging area is backed up to a first partition area of a plurality of rotating disk drives;
Fig. 7 illustrates schematically a second write process carried out by a controller device of said data storage system for writing data blocks to a first data staging area of a first solid state data storage device and to a second user data area of a second solid state data storage device; and
Fig. 8 illustrates schematically a second back up process for backing up of data in a first data staging area of a first solid state data storage device to a first data partition area of a plurality of rotating disk drives.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

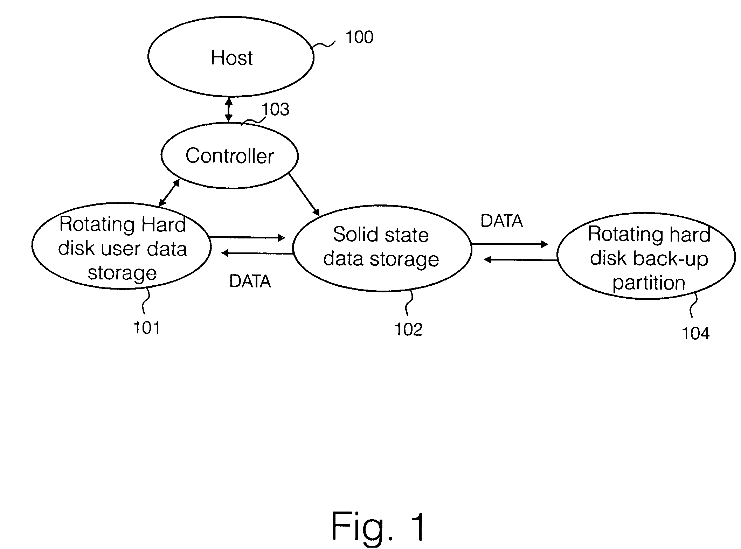

Referring to Fig. 1 herein, there is illustrated schematically a logical diagram illustrating a data storage system according to a first specific implementation of the present invention. A controller means 103 receives data from a host computer 100 and can read and write to a first memory area 101 of relatively slow access time memory, provided by one or a plurality of rotating hard disk drives. The controller means 103 can also read and write data from one or a plurality of faster access memory areas provided by non-volatile solid state data storage devices 102, having a relatively faster access time than the hard disk data storage devices. Data is transferred between the hard disk data storage area 101 and the solid state data storage area 102 under control of the controller means 103, which is typically implemented as a computer program and processor. A hard disk partition memory area 104 is used to regularly back up data from the solid state data storage device memory area to provide recovery of data in the event of a failure of either solid state data storage device.

Selected data is moved from the rotating disk data storage devices onto the solid state data storage devices. The data selected is suitably the most frequently accessed data. Data which is accessed less frequently, may be stored on the rotating hard disk data storage devices, where access times are slower. Therefore, for the most frequently accessed data read/write times are improved compared to the conventional case using rotating disk data storage devices. However to achieve a cost effective solution, conventional rotating hard disk drives are retained in the data storage system for storage of bulk user data which is relatively less frequently accessed. For a host computer using the data storage system, there is an overall improvement in data storage access times for much of the data which is read and written to the data storage system, compared to a prior art data storage system having solely rotating hard disk drives.

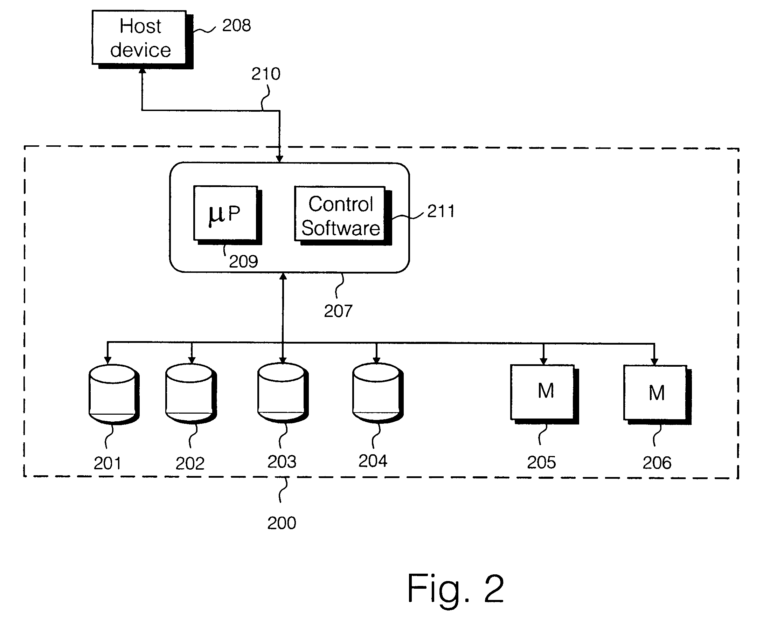

Referring to Fig. 2 herein, there is illustrated a physical architecture of a data storage system 200, comprising an array of one or a plurality of rotating disk data storage devices 201-204; two or more non-volatile solid state high capacity memory data storage devices 205, 206; and a controller device 207 for managing storage of data amongst the one or plurality of rotating disk data storage devices and the plurality of solid state data storage devices. A host device 208 reads and writes data from and to the data storage system 200, via a known small computer system interface (SCSI) cable, or a known Fiber Channel Association cable and interface 210.

The data storage system of Fig. 2 may comprise a legacy redundant array of inexpensive disks (RAID) device, with the addition of the plurality of non-volatile solid state data storage devices 205, 206 and associated controller 207 for controlling transfer of data between the rotating disk drives and the solid state memory devices. Each solid state data storage device may externally look very similar to a rotating hard disk data storage device, being of a similar size, shape and weight. However, the solid state data storage device may have read and write times of the order of 1000 times quicker than the conventional rotating disk hard drive unit. The solid state data storage devices may typically have a data storage capacity of one to two Gbytes.

In a best mode implementation, the solid state data storage devices comprise Magnetic Random Access Memory (MRAM) data storage devices. These devices are non-volatile, and have relatively fast read and write access times compared to conventional rotating disk hard drive units. The MRAM devices are intrinsically non-volatile, that is to say when electrical power supply is removed from the devices, the data is retained in the memory and is not lost.

However, in an altemative implementation, the solid state of data storage devices may comprise flash EPROMS, ferro electric random access memories (FERAM), or Dynamic Random Access Memory (DRAM) arrays. In the case of a DRAM unit, DRAM devices are intrinsically volatile, and lose their stored data when power is removed. In order to make a non-volatile solid state data storage device, a combination of an array of DRAM devices, and a battery power supply in a casing is provided. Although DRAM's provide better performance in terms of read and write access times than a comparable MRAM unit, there is the disadvantage of the need to provide a battery back-up to overcome the intrinsic volatility of DRAM devices to provide a non-volatile DRAM data storage unit.

On the other hand, flash EPROM's are intrinsically non-volatile, but have poorer read and write access times than a comparable MRAM device.

FERAM devices are intrinsically non volatile, and have access times comparable with those of MRAM devices, but have much lower storage capacity densities.

MRAM data storage units, DRAM data storage units and EPROM data storage units are alternative embodiments, but in the best mode the MRAM data storage unit is selected to give the optimum combination of intrinsic non-volatility, and fast read and write access times.

Controller device 207 comprises a local processor 209 having the task of managing data transfers between the first and second solid state data storage devices and the one or more hard disk drives, and managing storage of data as between the plurality of hard disk drives. The local processor operates in accordance with control software 211, operating a plurality of management algorithms for effecting the data transfers between individual data storage devices in the data storage system 200.

Where a plurality of rotating hard disk drives are used, user data may be striped across the plurality of rotating hard disk drives, such that blocks of user data are redundancy encoded using a known error correction coding, for example a Reed Solomon coding, and each data block is stored across the plurality of rotating disk drives. In the event of a failure of any one disk drive, the data stored on that disk drive may be recoverable from the redundancy coding in the data stored on the other rotating disk drives. If any one disk fails, there is enough data on the remaining disks to reconstruct the lost data on the failed disk. A new replacement disk drive can be inserted to replace the failed disk drive and the lost data on the new disk drive can be reconstituted automatically from the redundancy coded data on the other disk drives. Thus, within the plurality of rotating disk drives there is no single point of failure. It is important that introduction of a solid state data storage device does not introduce a single point of failure.

The provision of two or more solid state data storage devices overcomes the risk of a single point of failure, in the event that one of the solid state data storage devices should fail. Thus, a single point of failure in terms of hardware is avoided. The plurality of hard disk drives are augmented by the plurality of solid state data storage devices in a way such that the introduction of the solid state data storage devices do not introduce a single point of failure into the data storage system 200.

However, to avoid loss of data in the event of a failure of a single solid state data storage device, there must be ensured that the data on each solid state data storage device is recoverable from elsewhere in the array of data storage devices.

A simple mirror replication of the data stored on first solid state data storage device 205 onto second solid state data storage device 206 would achieve reliability. However, this is an inefficient solution, since there is incurred the cost of two solid state data storage devices, but the memory capacity of only one solid state data storage device is utilized.

In the best mode implementation presented herein, it is aimed to avoid a single point of failure by introduction of two or more solid state data storage devices, whilst optimizing the relatively high performance data storage capacity provided by those devices for storage of user data. In a first configuration, the data storage system operates such that as files are retrieved from the one or more rotating disk data storage devices, they are copied to the solid state data storage devices 205, 206 which act as a cache for those files. Various logical rules may be embedded in the controller device 207 for determining when a file will be copied to the solid state data storage devices, to achieve optimum performance. The controller device may include one or a plurality of algorithms for determining which data files are the most used, and for determining whether these should be stored in the solid state memory data storage device, or overwritten in the solid state data storage device. The solid state data storage devices act as a cache for the one or more rotating disk drives.

The controller device 207 maintains a table data containing entries of where each block of data has been stored. As data is moved from the solid state data storage device memory to the rotating disk drive area, and back again from the rotating disk drive areas to the solid state data storage device areas, the table data is updated. In the event of a failure of either solid state data storage device, the controller can determine where a block of lost data is also copied either on the other solid state data storage device or on the plurality of rotating disk drives.

In a second configuration, the solid state data storage devices are configured as permanent user data storage areas to augment the storage areas of the one or more rotating hard disk drives, for permanent storage of bulk user data.

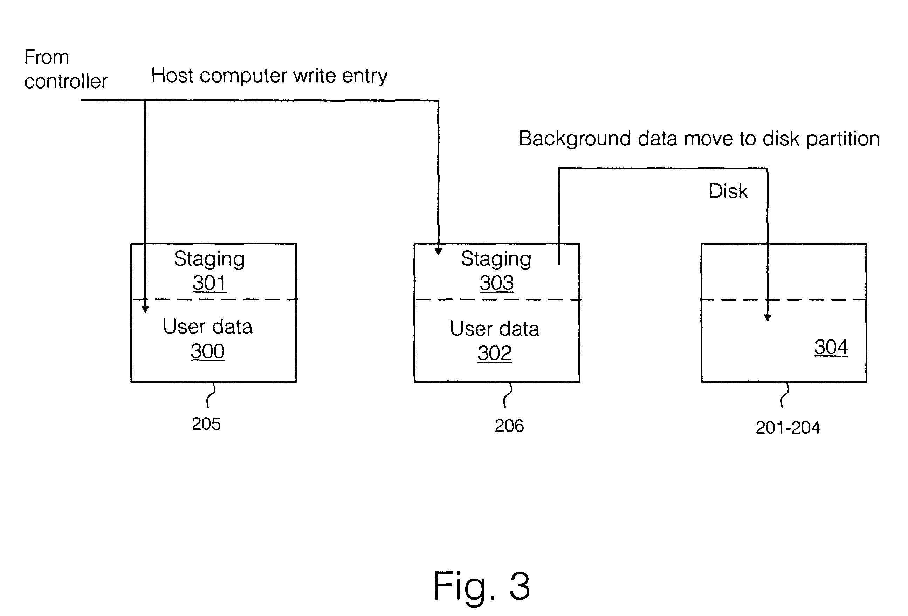

Referring to Fig. 3 herein, there is illustrated schematically partitioning of data areas within the first and second solid state data storage devices 205, 206 and movement of data between memory areas on the solid state data storage devices and the hard disk drive data storage devices. With two solid state data storage devices, full redundancy may be achieved, whilst utilizing more than the data storage capacity of one solid state data storage device and achieving as far as possible the combined data storage capacity of both solid state data storage devices.

The first solid state data storage device 205 is partitioned logically such that there is a first main user data area 300, which forms the bulk of the memory capacity of the device, and a first data staging area 301. Similarly, the second solid state data storage device is partitioned into a second user data area 302, occupying the bulk of the memory area of that solid state data storage device, and a second data staging area 303. In the best mode, each data staging area may constitute less than 50% of the total memory capacity of the corresponding respective solid state data storage device.

Whilst the best mode implementation herein shows a separate processor 209 comprising control device 207, in principle, the functions of the control device can be provided by software in the host device 208 itself. However, this has the disadvantage of taking up processing power from a processor in the host device 208. The best mode implementation described herein is aimed at a mid-range data storage solution. The invention is not limited to use of a separate processor at the control device 207, and the functionality of the control device 207 may be carried out using a processor in host device 208.

Fig. 3 illustrates a first storage operation of a host computer writing to the data storage system. The host computer may see the controller 207 of the data storage system as one logical drive unit, for example drive D. The controller handles data storage to all the data storage devices in the data storage system. The host computer, when it writes data to the data storage system writes data to the controller 207, which then writes data to the first user data area 300 of the first solid state data storage device, and writes a copy of that same data into the second data staging area 303 of the second solid state data storage device. These write operations occur simultaneously. Bearing in mind that the second data staging area 303 has a significantly lower data capacity than the first user data area 300, if data is continued to be written to the data storage system, the second data staging area 303 will be the first high performance data storage area to become full. Therefore, the controller device 207 moves the data in the second data staging area 303 into a first partitioned memory area 304 stored on the plurality of hard disk drives. The memory management strategy is to keep the second data staging area 303 as empty as possible, by regularly transferring the data stored in that staging area onto the first partition area 304 in the plurality of disk drives 201-204, as soon as possible after data is received in the second data staging area.

In the best mode herein, the second data staging area 303 is emptied on a first in-first out basis to the first hard disk data partition. However, in other implementations, other algorithms for selecting the data to be emptied are possible. It is important to ensure that the second data staging area 303 does not overflow, resulting in overwrite of data, before this data has been backed up onto the first data partition area 304 on the hard disk drives. If the second data staging area 303 is allowed to become full, then any write operations from the host computer will be held off, and the host computer could stall.

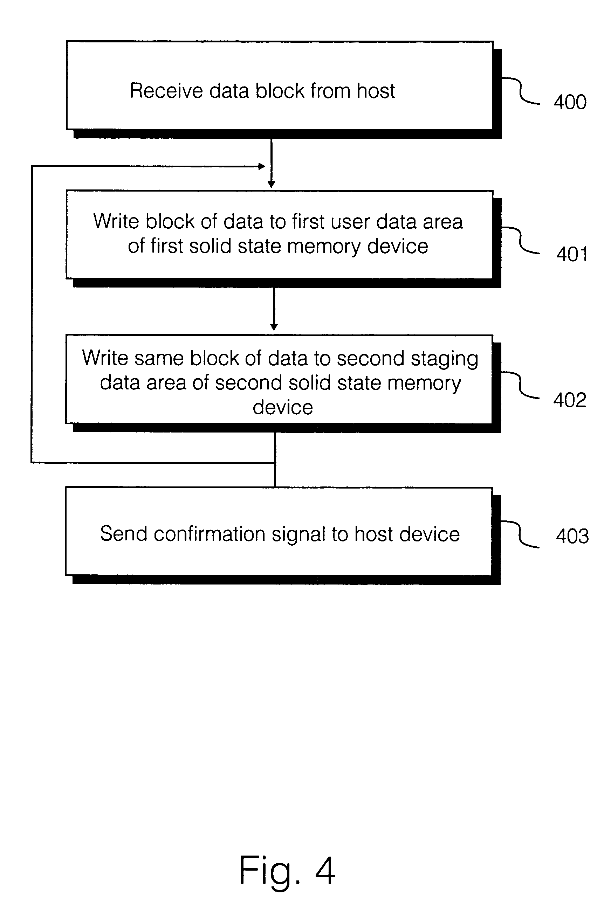

Referring to Fig. 4 herein, there is illustrated schematically a first write process carried out by controller device 207 upon receiving a data block from host device 208, for storage in the data storage system. At all times, data written into the first solid state data storage device 205 must be replicated in the second solid state data storage device 206, in case either of the solid state data storage devices should fail. In step 400, a block of data is received from the host device 208 by the controller device 207. In step 401 the block of data is written to the first user data area of the first solid state memory device. In step 402, the same data block is written to the second data staging area of the second solid state memory device. In practice, steps 401, 402 may be carried out in interleaved manner, such that part of the data block is written to the first solid state storage device 205, followed by the same segment of data being written to the second solid state storage device 206, followed by a further segment written to the first said state data storage device, the further segment being written to the second solid state data storage device and so on until the whole of the data block has been written to both solid state data storage devices segment by segment. Using a single processor 209, this operation therefore takes twice as long (i.e. about 20 µs) as writing the data block to a single solid state data storage device. However, since the write times to the solid state data storage device are of the order of 10 µs, this is of the order of one thousand times faster than the write time to the conventional rotating disk drive, which is of the order of 10 ms. Therefore, doubling the write time to the solid state data storage device is insignificant compared to the write time to a rotating disk drive device.

However, the write speed can be reduced to the write time of a single solid state data storage device, if two processors are used in parallel to write the segments of data to the first and second solid state storage devices simultaneously in parallel. In the best mode implementation, a single processor is used for reasons of cost reduction, and the small disadvantage in increased write time to the solid state data storage devices is accepted.

In step 404, once the control device 207 has written the complete data block to both solid state data storage devices, it sends a confirmation signal back to the host device 208, which the host device may use as a trigger to send a further data block for storage.

Use of a high performance non-volatile solid state data storage device for receiving written data from a host computer allows a quick response time for sending the confirmation signal back to the host's computer, acknowledging that the data has been correctly written to memory.

In contrast, prior art conventional volatile cache plus hard disk data storage devices operate on a write-through basis, in which data written to the cache is re-written on to the rotating hard disk drive before an acknowledgement signal is sent back to a host computer writing the data. In this way, in the conventional write-through cache data storage device systems, it is ensured that the data is written to non-volatile memory on the rotating disk, before an acknowledgement signal is sent back to the host device. Thus, if there is a power failure during a write-through operation, no acknowledgement signal will be received, and the data stored in volatile memory may be lost. The host device will then re-send the data, because the acknowledgement signal has not been received. However, the conventional write-through cache data storage systems, incur the penalty of slow access time to the rotating hard disk drives.

In contrast, in the presently disclosed system, an acknowledgement signal is received by a host device faster, because data is written to a quick access time high performance high capacity non-volatile solid state data storage device.

This write time of approximately 20 µs in the best mode herein compares with a prior art write time, taking example of a prior art 5-disk raid array, of the order of 40 ms. The prior art raid array has a relatively high write time because the data is striped across the 5-disks, and in order to check that the data has been written correctly, the data must also be re-read from each of the 5 disks by a control device. Therefore a significant write speed advantage is achieved by the best mode implementation over prior art arrays.

Referring to Fig, 5 herein, there is illustrated schematically a first back-up process of the data storage system. In the first back up process, data in the second data staging area 303 of the second solid state data storage device is transferred to the first partition area 304 on the plurality of disks 201-204, as soon as the solid state data storage device is available to read from. The data in the second data staging area 303 is re-written to the first data partition area as soon as possible, in order to keep the second staging area 503 available for receiving as large a quantity of write data as possible. This is in contrast to a conventional prior art volatile cache, where the cache is emptied as late as possible, in order to cache as large a quantity as data at once as possible.

Second staging area 303 is used to transiently store data on its way to the first rotating disk partition area 304. The same data is also stored in the first user data area 300, so that if the second solid state data storage device fails at any time, data recovery is available from the first solid state data storage device.

In step 500, the processor 209 under control of control software 211 checks whether any data has been recently written to the second data staging area 303. If new data has been recently written to the second staging area, then in step 501 the controller checks whether the second staging area is available for reading, that is to say checks that the second solid state memory device is not busy, and checks in step 502 whether there is unimpeded access to the rotating hard disk(s). If both the hard disk drives and the second staging area are available, then in step 503 data is transferred from the second data staging area to the first hard disk partition area.

If the physical rotating hard disk is already being accessed for a write operation, then a transfer from the solid state device to the rotating hard disk cannot be made. Both the rotating hard disk must be available for writing, and the solid state data storage devices must be available for reading in order to complete step 503 of copying the data in the second data staging area to the first hard disk partition area.

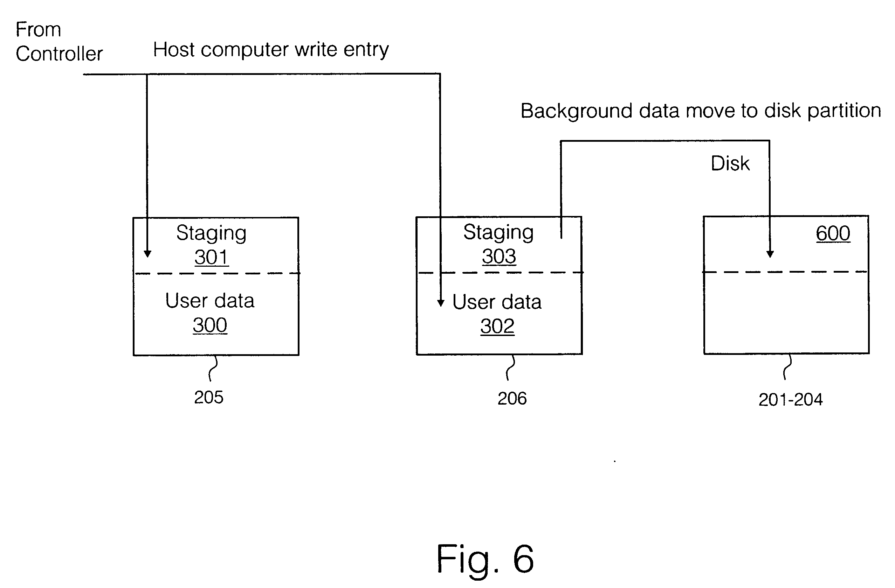

Referring to Fig. 6 herein, there is illustrated schematically a second storage operation of the data storage system carried out contemporaneously with the processes described with reference to Figs. 3-5 herein, for writing a second block of data to the data storage system.

An equivalent process to that described with reference to Figs. 3 to 5 occurs during a write operation of a block of data from the host device, whereby the second block of data is written to the second user data area 302 of the second solid state data storage device, and to the first data staging area 301 of the first solid state data storage device. The data written into the first data staging area is periodically backed up to a second partition memory area 600 on the plurality of disk drives 201-204.

Therefore, the first data staging area 301 has written to it the same data as the second user data area 302, the second data staging area 303 has the same data written to it as the first user data area 300, the second data staging area 303 is backed up onto the first hard disk partition area 304; and the first data staging area 304 is backed up onto the second hard disk partition area 600.

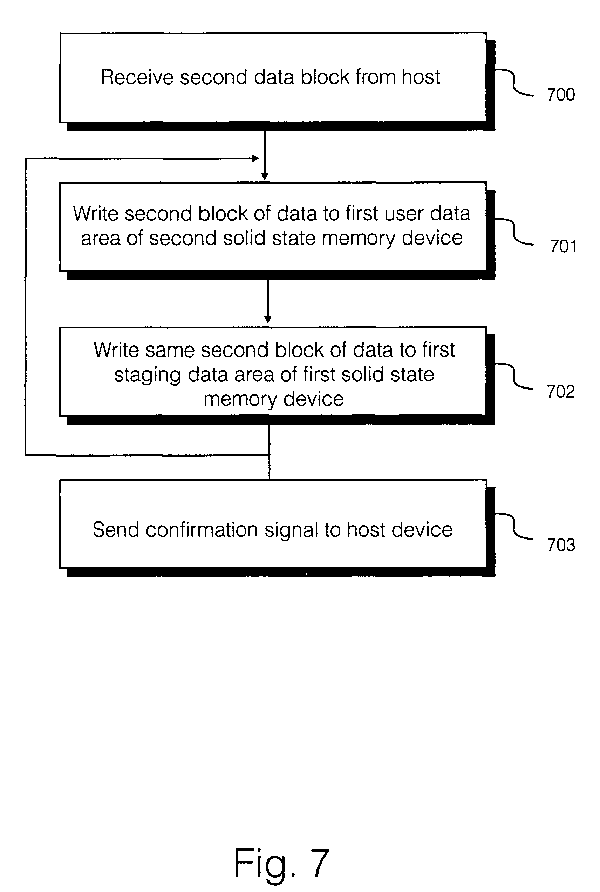

Referring to Fig. 7 herein, there is illustrated schematically a second write process carried out by controller device 207. In step 700, the second data block is received by the controller device from the host device. In step 701, the received block of data is written to the second user data area of the second solid state memory device. Contemporaneously with step 701, the same block of data is written to the first data staging area 301 of the first solid state memory device in step 702. Similarly, as with steps 401 and 402 described herein above, writing of a block of data to the second user data area and the first data staging area is made by partitioning the second block of data into segments of data which are written alternatively to the second user data area and first data staging area until the whole of the data block has been written. In step 703, the block of data having been written to the second user data area and the first data staging area, a confirmation signal is returned to the host device, upon receipt of which the host device may send a further block of data.

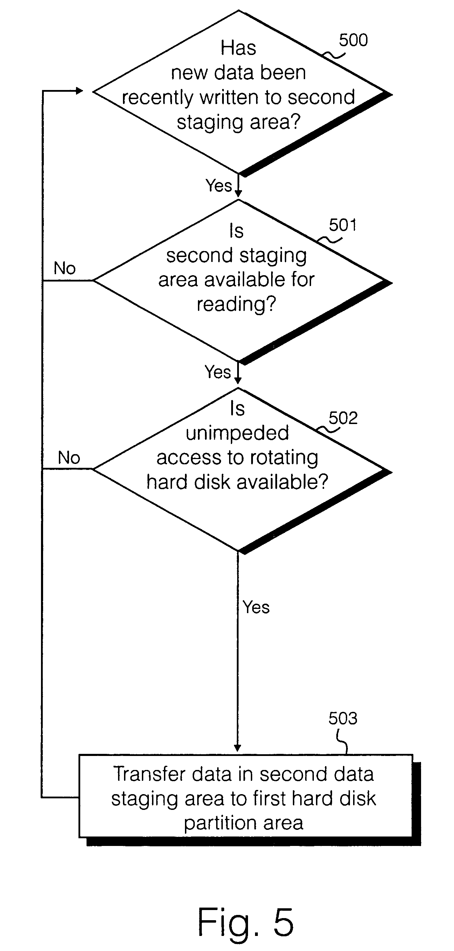

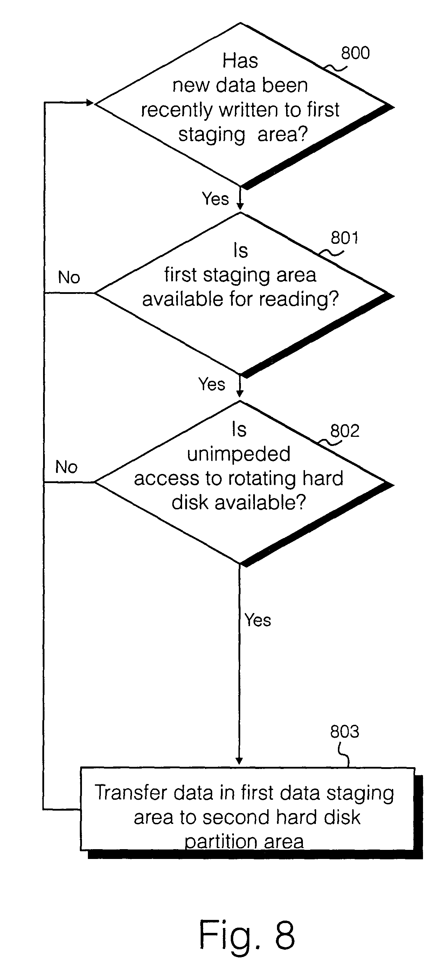

Referring to Fig. 8 herein, there is illustrated schematically a background back up operation for backing up the content of the first data staging area to the second hard disk partition area. The process of Fig. 8 is similar and runs in parallel to the process described herein before with reference to Fig. 5. In step 800, the processor 207 determines whether new data has been written to the first staging area.

In step 801, it is checked whether the first staging area is available for reading. In step 802, it is checked whether the rotating hard disk drive(s) have unimpeded write access. In step 803, provided the second solid state data storage device is available for reading, and the one or more rotating disk drives are available for writing, then data is transferred from the first data staging area in the second solid state data storage device on to the second hard disk partition area, thereby emptying the data in the first data staging area on to the rotating hard disk drives.

In the best mode, staging areas are is needed because writing to a single solid state data storage device would give a single point of failure without there being parallel writing to another solid state memory storage device. It is important that at every stage, there are always two copies of the data. In the best mode, the two copies of each segment of a first block of data exist either:
- In a user data area of a solid state data storage device, and in a data staging area of the other solid state data storage device; or
- In the first user data area of the first solid state data storage device and in the first data partition area of the plurality of disks.

In parallel with this, a second block of data is stored in the first and second solid state data storage devices, and this has at least two copies stored at all times including:
- The second block of data stored in the first data staging area of the first solid state device and the second user data area of the second solid state data storage device; or
- The second data block stored in the second user data area of the second solid state data storage device and the second disk partition area of the plurality of hard disks.

Between the two solid state data storage devices, the first block of data is mirrored, and additionally the second block of data is mirrored. The rate at which the data staging area can be emptied is limited by the rate at which the data can be transferred and written to the hard disk.

A large amount of data is built up in the user data areas of the solid state data storage devices. In an embodiment in which the controller writes to the two solid state devices on a single bus, for frequently used data, the access time to a host computer is therefore twice the access time of each of the solid state devices, of approximately 10-20 µs, being a significant improvement on the millisecond access times of prior art hard disk storage arrays. Single point of failure is eliminated by the use of a pair of solid state data storage devices.

For a best mode embodiment in which the controller has a separate bus to each solid state device, data can be written in parallel to the two solid state devices, and the access time is equivalent to the access time of one solid state device.

For less frequently used data, occasionally the host will need to access the hard disk drives, in which case access times will be slower. However, on average the average access time for data will improve compared to the prior art RAID case. The size of the first and second data staging areas 304, 600, are preferably large enough to contain all the data in the first and second user data areas 300, 302. With current solid state data storage technology each non-volatile solid state device will typically have a data capacity of the order of 2Gbytes.

Because the solid state data storage devices have no moving parts, their reliability can be expected to be greater than the reliability of a conventional rotating hard disk drive having moving parts. However, even though the probability of failure of a solid state device is lower than that of a rotating hard disk drive, redundancy by provision of two solid state data storage devices is still desirable to avoid a single point of failure.

Data stored on the plurality of solid state data storage devices and in the partition area of the rotating disk drive memories need not be redundancy encoded, since physical redundancy exists by virtue of the copies of data being present on either two solid state data storage devices and/or a solid state data storage device and a hard disk partition area. By removing the need for redundancy coding, access times are significantly improved to the data storage device. Calculation of error correction codes incurs a time penalty which is significant compared to the write time to the solid state data storage devices. This is not the case for writing to rotating disk drive devices, where the error correction code times are small compared to the write times to the rotating disk drives. The control device 207 becomes aware of any failures of a said solid state data storage device by means of a conventional command-acknowledgement protocol as is known in the art.

## Claims

1. A data storage system comprising:
at least one rotating disk data storage device;
a plurality of solid state data storage devices, each having a data capacity less than a data capacity of said rotating disk data storage device;
wherein each solid state data storage device is divided into a data staging area and a user data area; and
said plurality of data storage devices are arranged such that a set of data is written to at least two of said plurality of solid state data storage devices; and
data is copied from a said data staging area of a said solid state data storage device into said rotating disk data storage device.

2. The data storage system as claimed in claim 1, comprising a controller device comprising a processor and a computer program for controlling said processor, said controller device operating to:
receive data from a host device;
write said data to said plurality of solid state data storage devices, such that a copy of said data is stored on each said solid state data storage device; and
transfer data from a said data staging area of at least one said solid state data storage device to a data partition area of said at least one rotating disk data storage device.

3. The data storage system as claimed in claim 1, wherein a said solid state data storage device comprises a magnetic random access memory device.

4. The data storage system as claimed in claim 1, wherein said solid state data storage device comprises at least one intrinsically volatile dynamic random access memory, and at least one battery device, providing a combined non-volatile solid state data storage device.

5. The data storage system as claimed in claim 1, wherein said solid state data storage device comprises a non-volatile flash electrically programmable read only memory.

6. The data storage system as claimed in claim 1, wherein said solid state data storage device comprises a ferro electric random access memory device.

7. The data storage system as claimed in claim 1, wherein said solid state data storage devices have a memory capacity of greater than 1 Gbyte.

8. The data storage system as claimed in claim 1, wherein said solid state data storage devices are non-volatile devices.

9. The data storage system as claimed in claim 1, wherein a said data staging area comprises less than 50% of the data storage capacity of a corresponding said solid state data storage device.

10. The data storage system as claimed in claim 1, comprising a controller device comprising a processor and a computer program for controlling said processor, and a plurality of data buses connecting said controller with said plurality of solid state data storage devices, wherein each said solid state data storage device communicates with said controller device by a corresponding respective separate said bus.

11. A method of storing data in a data storage system comprising a plurality of rotating disk drive data storage devices and a plurality of solid state data storage devices, said method comprising the steps of:
writing a first block of data to a first user data area in a first said solid state data storage device;
writing said first block of data to a second data staging area in a second said solid state data storage device;
writing said data stored in said second data staging area of said second solid state data storage device to a first data partition area in said plurality of rotating disk drives.

12. The method as claimed in claim 11, further comprising the steps of:
writing a second block of data to a first data staging area of said first solid state data storage device;
writing said same second block of data to a second user data storage area of said second solid state data storage device; and
writing said second block of data from said first data staging area of said first solid state data storage device to a second partition memory area of said plurality of rotating disk drives.

13. The method as claimed in claim 11, wherein said step of writing data to said second data staging area and said first user data area comprises:
(i) receiving said first block of data in a plurality of data segments, each data segment being smaller than said first block of data;
(ii) writing a said segment to said second data staging area and writing said data segment to said first user data area substantially simultaneously;
(iii) after writing said segment to said second data staging area and said first user data area, selecting a new segment;
(iv) repeating steps (ii) to (iii) until all said segments of said data first block are written; and
(v) generating a confirmation signal for confirming that said first data block has been written.

14. The method as claimed in claim 11, comprising the steps of:
determining whether new data has been written into said second data staging area; and
if new data has been written to said second data staging area, copying data of said second data staging area to said first data partition area of said plurality of rotating disks.

15. The method as claimed in claim 11, comprising the steps of:
determining whether new data has been written into said second data staging area;
determining whether said second data staging area is available for reading;
determining whether unimpeded access to said first data partition area of said plurality of rotating disks is available; and
copying data of said second data staging area to said first data partition area of said plurality of rotating disks.

16. The method as claimed in claim 11, wherein said step of writing data to said first data staging area and said second user data area comprises:
(vi) receiving said second block of data in a plurality of data segments, each data segment being smaller than said second block of data;
(vii) writing a said segment to said first data staging area and writing said segment to said second user data area substantially simultaneously;
(viii) after writing said segment to said first data staging area and said second user data area, selecting a new segment;
(ix) repeating steps (vii) to (viii) until all said segments of said second data block are written; and
(x) generating a confirmation signal for confirming that said second data block has been written.

17. The method as claimed in claim 11, comprising the steps of:
determining whether new data has been written into a first data staging area; and
if new data has been written to said first data staging area, copying said data of said first data staging area to a second data partition area of said plurality of disks.

18. The method as claimed in claim 11, comprising the steps of:
determining whether new data has been written into a first data staging area; and
if new data has been written to said first data staging area, copying data of said first data staging area to said second data partition area of said plurality of rotating disks.

19. The method as claimed in claim 11, comprising the steps of:
determining whether new data has been written into a first data staging area;
determining whether said first data staging area is available for reading;
determining whether unimpeded access to a second data partition area of said plurality of rotating disks is available; and
copying data of said first data staging area to said second data partition area of said plurality of rotating disks.
